# FASCICULE DE BREVET EUROPEEN

(11) **EP 0 987 442 B1**
(45) Date de publication et mention de la délivrance du brevet: **23.03.2005**
(21) Numéro de dépôt: 99401747.3
(22) Date de dépôt: 09.07.1999
(51) Int. Cl.: F04D 15/02, G05D 9/12, E03F 5/22

(54) **Installation de pompage à minuterie**
Pumpanlage mit Zeitschalter
Pumping station with timer

(30) Priorité: 18.09.1998 FR 9811673
(43) Date de publication de la demande: 22.03.2000
(73) Titulaire: KSB S.A.S, 92230 Gennevilliers (FR)
(72) Inventeur: Symoens, Louis, 59155 Faches-Thumesnil (FR); Berthon, Jacques, 59130 Lambersart (FR)
(74) Mandataire: Eidelsberg, Victor Albert

(56) Documents cités:
- EP-A- 0 580 558
- EP-A- 0 775 827
- WO-A-95/09981
- GB-A- 2 175 647
- US-A- 4 749 925

## Description

Afin que les pompes de relevage ne se bloquent pas lorsqu'elles ne sont pas sollicitées pendant des périodes plus ou moins longues, il est traditionnellement fait appel à une minuterie donnant un ordre de mise en service de la pompe régulièrement pendant une durée prédéterminée. Une telle installation de pompage est connue par example par la demande de brevet EP0 580 558 A1.

Cette solution présente les risques suivants sur le fonctionnement et la durée de vie de la pompe de relevage :

Fonctionnement sans eau avec risque de détérioration de la garniture d'étanchéité.

Risque de désamorçage de la pompe lorsque la quantité de liquide dans la cuve est trop faible et difficulté de réamorçage quand la tuyauterie de refoulement est en charge.

L'invention vise une installation de pompage d'un effluent qui, tout en supprimant le danger d'un fonctionnement sans eau et de désamorçage de la pompe, permet d'être sûr que, dans un intervalle de temps donné, la cuve soit vidée jusqu'à un niveau bas.

L'invention a donc pour objet une installation de pompage d'un effluent d'une cuve, comprenant une pompe montée de manière à refouler l'effluent hors de la cuve, un détecteur de niveau haut de l'effluent dans la cuve, un détecteur de désamorçage de la pompe, un circuit électronique principal de commande qui met la pompe sous tension quand le détecteur de niveau haut détecte que l'effluent a atteint ce niveau haut et qui arrête la pompe quand le détecteur de désamorçage détecte un désamorçage, un circuit électronique périodique de commande comportant une minuterie émettant, à des intervalles de temps donnés, un signal de commande de la pompe suffisamment long pour que la pompe atteigne sa vitesse nominale, mais insuffisamment long pour que la pompe fonctionne à vide pendant une durée supérieure au temps mis par le détecteur de désamorçage pour arrêter la pompe.

La cuve est ainsi vidée à des intervalles de temps donnés, mais il est mis fin automatiquement à la mise sous tension de la pompe lorsque la quantité d'effluents dans la cuve est trop petite.

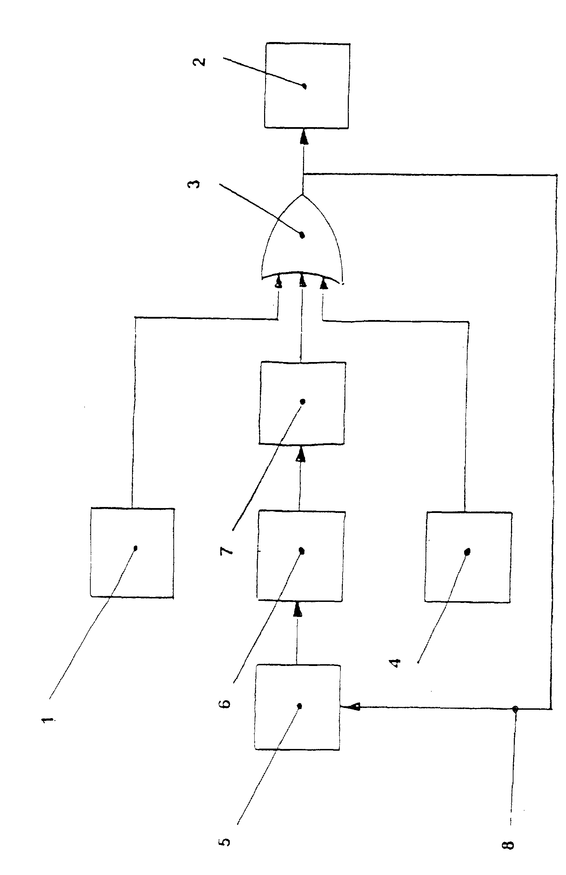

La figure unique du dessin annexé illustre le circuit électrique de commande de l'installation de pompage suivant l'invention.

Ce circuit comporte un capteur de niveau haut 1 relié à la pompe 2 par l'intermédiaire d'une porte logique OU 3.

Le maintien en fonctionnement est assuré par l'intermédiaire d'un capteur de désamorçage 4 (ce capteur peut être remplacé par un détecteur de niveau bas) qui est relié à une entrée de la porte OU 3. Les éléments électroniques mentionnés ci-dessus constituent le circuit électronique principal de commande. Le détecteur 1 envoie, en réponse à la détection du niveau haut dans la cuve, un signal temporaire à la porte OU 3 qui fait que la porte OU autorise la mise en marche de la pompe 2. Dès que celle-ci fonctionne, le capteur 4 envoie un signal à la porte OU qui prend la relève du signal envoyé par le détecteur 1. Dès que le détecteur 4 détecte le niveau bas, il envoie un signal correspondant à la porte 3 qui met la pompe 2 hors tension.

Il est prévu également un circuit électronique périodique de commande qui comprend un circuit 5 de réinitialisation relié à une minuterie 6, elle-même reliée à un timer 7, lequel est relié à une entrée de la porte OU. Le circuit de réinitialisation 5 est relié à la sortie de la porte OU par une ligne 8. A chaque démarrage de la pompe 2, le circuit de réinitialisation 5 est activé et la minuterie 6 recommence à décompter le temps.

On suppose que la cuve est partiellement remplie et qu'il n'y a plus d'arrivée d'effluents depuis un intervalle donné à l'avance, de par exemple 24 heures.

La minuterie 6 donne alors, par l'intermédiaire du timer 7, un ordre de mise en marche d'une durée suffisante pour assurer une montée en vitesse totale de la pompe (impulsion de marche d'environ 1 seconde).

Le maintien en marche de la commande de pompe 2 est alors réalisé par le circuit du détecteur de désamorçage 4.

L'arrêt de la pompe 2 a lieu dès que le détecteur de désamorçage 4 détecte que la pompe 2 commence à se désamorcer.

Cette mise en marche forcée de la pompe permet :
- Le dégommage du mobile.
- De vider la cuve jusqu'au niveau le plus bas autorisé par l'aspiration de la pompe en entraînant tous les flottants résiduels.

On suppose maintenant qu'il n'y a plus d'arrivée pour diverses raisons, vacances ou autres, il n'y a plus d'arrivée d'effluents depuis plusieurs jours. Le niveau d'effluents dans la cuve est donc limité au niveau déterminé lors de la mise en service précédente jusqu'au seuil de désamorçage de la pompe.

La minuterie 6, n'ayant pas été réinitialisée, donne à nouveau, après l'intervalle prédéterminé (24 heures), une impulsion de mise en marche de la pompe d'une durée suffisante pour assurer une montée en vitesse totale de la pompe (impulsion de marche d'environ 1 seconde).

Le détecteur de désamorçage 4, du fait de la faible quantité d'effluents, donne immédiatement l'ordre d'arrêt de la pompe, limitant ainsi automatiquement son temps de fonctionnement sans eau.

## Revendications

1. Installation de pompage d'un effluent d'une cuve, comprenant une pompe (2) montée de manière à refouler l'effluent hors de la cuve, un détecteur (1) de niveau haut de l'effluent dans la cuve, un détecteur (4) de désamorçage de la pompe (2), un circuit (3) électronique principal de commande qui met la pompe (2) sous tension quand le détecteur (1) de niveau haut détecte que l'effluent a atteint ce niveau haut et qui arrête la pompe (2) quand le détecteur (4) de désamorçage détecte un désamorçage, **caractérisée par** un circuit électronique périodique de commande, qui comporte une minuterie (6) émettant, à des intervalles de temps donnés, un signal de commande de la pompe (2) suffisamment long pour que la pompe (2) atteigne sa vitesse nominale, mais insuffisamment long pour que la pompe (2) fonctionne à vide pendant une durée supérieure au temps mis par le détecteur (4) de désamorçage pour arrêter la pompe (2).

2. Installation suivant la revendication 1, **caractérisée en ce que** la minuterie (6) ne commence à décompter l'intervalle de temps qu'après le dernier arrêt de la pompe (2).

## Patentansprüche

1. Pumpanlage für Abwasser aus einem Tank, die eine zur Förderung des Abwassers aus dem Tank montierte Pumpe (2), einen Detektor (1) für einen hohen Abwasserstand im Tank, einen Detektor (4) für das Abreißen des Förderstroms der Pumpe (2) und einen elektronischen Hauptsteuerungsschaltkreis (3) enthält, der die Pumpe (2) unter Spannung setzt, wenn der Detektor (1) für einen hohen Wasserstand feststellt, dass das Abwasser diesen hohen Stand erreicht hat, und der die Pumpe (2) anhält, wenn der Leerlaufdetektor (4) ein Abreißen des Förderstroms feststellt, ***gekennzeichnet durch*** einen periodisch arbeitenden elektronischen Steuerungsschaltkreis, der eine Schaltuhr (6) enthält, die in bestimmten Zeitintervallen ein Steuerungssignal für die Pumpe (2) ausgibt, das lang genug ist, damit die Pumpe (2) ihre Nenngeschwindigkeit erreicht, das aber nicht lang genug ist, als dass die Pumpe für eine längere Zeitdauer als die vom Leerlaufdetektor (4) für das Anhalten der Pumpe vorgegebene Zeit leer laufen würde.

2. Anlage gemäß Anspruch 1, ***dadurch gekennzeichnet, dass*** die Schaltuhr (6) das Zeitintervall erst nach dem letzten Stopp der Pumpe (2) herunter zu zählen beginnt.

## Claims

1. Installation for pumping an effluent from a tank, comprising a pump (2) mounted so as to discharge the effluent outside the tank, a detector (1) of a high effluent level in the tank, a detector (4) of unpriming of the pump (2), a main electronic control circuit (3) which energizes the pump (2) when the high level detector (1) detects that the effluent has reached this high level and which stops the pump (2) when the unpriming detector (4) detects an unpriming, **characterized by** an intermittent electronic control circuit, which comprises a timer (6) which, at given time intervals, transmits a pump (2) control signal which is sufficiently long for the pump (2) to reach its nominal speed, but insufficiently long for the pump (2) to operate at no-load during a period longer than the time taken by the unpriming detector (4) to stop the pump (2).

2. Installation according to Claim 1, **characterized in that** the timer (6) only starts to count the time interval after the last stoppage of the pump (2).
